# EUROPEAN PATENT SPECIFICATION

(11) **EP 3 287 748 B1**
(45) Date of publication and mention of the grant of the patent: **25.03.2020**
(21) Application number: 16020309.7
(22) Date of filing: 22.08.2016
(51) Int. Cl.: G01C 23/00

(54) **AN OPERATION-AWARE AERIAL NAVIGATION SYSTEM**
LUFTFAHRTNAVIGATIONSSYSTEM
SYSTEME DE NAVIGATION AERIENNE

(43) Date of publication of application: 28.02.2018
(73) Proprietor: Deutsche Telekom AG, 53113 Bonn (DE)
(72) Inventor: SBEITI, Mohamad, 45657 Recklinghausen (DE)
(74) Representative: Raible Deissler Lehmann Patentanwälte PartG mbB

(56) References cited:
- US-A1- 2005 090 972
- US-A1- 2015 066 248
- US-A1- 2015 379 874
- US-A1- 2016 140 851

## Description

The present invention refers to an operation-aware aerial navigation system that is configured to automatically derive and update, based on a given drone operation, in real time a 3D route for at least one drone, in such a way that all kind of operation requirements are met.

A new generation of lightweight (<150Kg) Remotely Piloted Aircraft Systems (RPAS, also termed Unmanned Aerial Vehicle - UAV) enables the design of networked aerial robotic systems for a wide range of applications. These include RPAS acting as WLAN or LTE aerial hotspots in emergency scenarios. Additionally, the RPAS can be equipped with sensors for cooperative exploration of uncontrolled emissions of liquid or gaseous contaminants. RPAS-assisted applications also include coverage extension/densification, precision farming, polar weather monitoring, inspections, 3D virtual reality, and others. Nevertheless, for such applications to become a reality, a reliable network is still needed to interconnect the RPAS and to provide a real-time connection to their ground control station, especially, beyond visual line of sight, which is expected to be supported from regulatory point of view in 2018.

The present invention tackles the technical problem of flying drones Beyond Visual Line Of Sight (BVLOS) in the civil air space. This technical problem is considered, according to the aviation community, as one of the main enablers of the drone disruptive technology (see http://www.uavdach.org/Home/uav_dach.htm).

Due to the following issues, flying civil drones BVLOS has not been solved, yet.

The main problem is the fact that there is no existing technology with relatively cheap and small equipments that is able to meet specific command and control communication requirements anywhere anytime beyond visual line of sight.

For Command and Control (C&C), two technology options exist: Satellite communication and cellular communication.

Satellite communication (used for military drones) is not quite feasible for (very) lightweight RPAS --- due to weight constraints --- and they are relatively expensive. Besides, it is questionable whether civil satellite communications meet the latency and security requirements of C&C.

Cellular networks are designed for communications on the ground, coverage and interference problems arise in the (lower) airspace. Nevertheless, in case there exists an adequate solution which is the goal of the present invention, cellular communication is an attractive solution as it meets in best cases (i.e. not anytime anywhere) all the C&C requirements, also the weight requirement of lightweight RPAS.

For many drone-enabled business use cases, it is not feasible to have a pilot for each drone (e.g., DHL, amazon), i.e., there is only an operator that defines the macro mobility goals, i.e. where should the drone go, and the drone flies autonomously to its target. That is, the drone should define itself its micro mobility goals, i.e. how to move (direction, speed) in the next second etc. Here, regulation imposes, that it should be always possible that the operator takes over the control from the auto pilot, which is not yet possible beyond visual line of sight as long as the above mentioned main problem has not been solved. It is also to be noted that the auto pilot of the drone (in the autonomous mode) needs to get information about the environment, which is also not possible without solving the above mentioned main problem.

The second problem is the fact that the command and control communication requirements and also payload communication requirements as well as regulations requirements strongly depend on an operation type: Size of drone, area where the drone is flying, purpose of the operation (will cameras be used etc.). For instance, requirements for precision farming in rural areas (relaxed requirements) are quite different from cargo over urban areas (strong requirements on command and control and from regulation point of view) or live animal filming in desert (strong payload/video requirement, i.e., high data rates for payload are required). Many use cases have no sense if the payload communication requirements are not met, e.g., if the drones are intended to be used for real time video transmission and the network does not support the corresponding data rates. Therefore, the use of the drones will not make sense.

Ideally, a technical solution approach shoud be able to meet all the different requirements in order to be widely adopted, only then it will pay off to invest in such a technical solution. Apart from that, up to now flying BVLOS was (is still in general) forbidden, nevertheless, this fact is changing and flying BVLOS will be allowed in the next years. For specific operations, allowance has been already granted. Here, the requirements to get an allowance in the future will (most probably) depend on the operation type (see http://ec.europa.eu/growth/sectors/aeronautics/rpas/index en.htm).

Document US 2015/066248 A1 discloses a method for planning a flight path for a search based on the steps of: receiving an indication of a search area boundary, receiving an indication of a selected search pattern and transmitting a flight path based on the search area boundary and the selected search pattern to an unmanned aerial vehicle.

In document US US 2016/140851 A1 a system for navigation of a drone comprising a drone control server configured to evaluate flight data of a drone based on a flight risk map that includes a plurality of zones, each zone being associated with a certain flight safety score, is disclosed.

Document US2005/0090972 A1 discloses a method for navigating an unmanned aerial vehicle by using an earth coordinate determined by a pixel selected by user using a graphical user interface.

A method to determine a flight path for a drone based on a request and based on one or more of weather information, air traffic information, obstacle information, regulatory information or historical information associated with a particular region ist disclosed by document US 2015/0379874 A1.

It is an object of the present invention to provide a system and a method to solve the above mentioned problems.

The problems are solved by a system and a method with the features of the independent claims. Further embodiments of the claimed system are described in the dependent claims and the following description.

The present invention provides a operation-aware aerial navigation system that comprises as modules at least one navigation server, at least one navigation agent and at least one navigation client, each module consisiting of several sub-modules. The navigation server is configured to aggregate and correlate multiple data received from different relevant data sources and from the at least one navigation client, and to dynamically provide to a user, i.e. a drone operator, a geo-zoned map based on the aggregated and correlated data. The at least one navigation agent is running on a respective at least one drone and configured to master steering of the drone. The at least one navigation client is running locally by the drone operator and acting as interface between the drone operator, the navigation server and external data sources and the navigation agent running on the drone and configured to compute and update a route for the drone that is involved in the operation, based on the map, feedback from the navigation agent and an initial input of the drone operator.

In the case that there are more than one drone involved in the operation which is under consideration, the navigation client is the interface between the drone operator, the navigation server and the external data sources and the navigation agents running on the respective drones, and is further configured to compute and update a respective route for each of the drones that are involved in the operation, based on the colored and 3D geo-zoned map and the initial input of the drone operator, i.e., the number of the drones involved, the macro target of the operation, the preferences of the drone operator and others.

According to an embodiment of the present invention, the map provided by the navigation server is a 3D colored and geo-zoned map.

According to a further embodiment, the navigation server comprises as sub-modules a navigation manager, a navigation information dispatcher and a navigation storage wherein the navigation information dispatcher is configured to collect and send navigation information internally, i.e. between the submodules, and externally, i.e. between submodules and data sources, and the navigation storage is configured to store relevant information, such as maps and logs (in raw format) for re-use and for non-repudiation issues and historical analysis.

Generally, the navigation manager is composed of three sub-submodules:
a) an aggregation engine, which is configured to sort/categorize information received from the navigation information dispatcher based on pre-defined criteria,
b) a correlation engine, which is configured to parse aggregated information and to use weighting mechanisms (rule-based) to correlate the information, and
c) a map generator, wherein the map generator is configured to generate based on the input of the correlation engine, based on local map information and based on information provided by the navigation information dispatcher the geo-zoned map, particularly the 3D colored and geo-zoned map.

The navigation server can be used centrally by a navigation system provider or locally by respective drone operators. In the case that the navigation server is run by a navigation system provider, the navigation server is offered as a service for one or more drone operators.

According to a further embodiment, the navigation server is configured to serve several navigation clients belonging to different drone operators.

The present invention provides an operation-aware aerial navigation system that, based on a given drone-operation (use case), automaticaly derives and updates in real time a 3D route, which is followed by at least one drone, normally by a plurality of drones, which are involved in the drone-operation, in such a way that all kind of requirements (regulation, communication, flight/weather and others) are met. That is, when using the claimed system, the drone(s) will only fly (automatically) in green/yellow zones, i.e., in areas where the communication requirements are met or where they are above a given threshold, i.e. not anytime anywhere, and where it is allowed by law to fly, etc. In that case, no technical problems with respect to flying BVLOS will arise and even in VLOS (visual line of sight) no pilot will be needed anymore to follow the respective drone the whole time as it is currently the case in order to make sure that the operator has always control over the drone(s). Today, for each drone, one pilot is needed, in addition to the operator that has an overview on all drones. With the claimed system, only the operator will be needed. Besides, with the claimed system, it is guaranteed (to a large extent) that aviation laws are respected, which is not the case today.

In summary, it can be stated that with this solution approach, instead of devel-opping a new technology from scratch to enable drone flights BVLOS anywhere anytime and to meet the different requirements for all relevant use cases (drone operations), it will become possible to select any communication technology and to automatically ensure that the drone(s) will only fly there where the communication requirements are met (data rates, latency, jitter, etc.). This is one main advantage. Another important advantage is that this solution approach also ensures that regulations, weather conditions and other relevant parameters are also took into consideration in the route calculation and update.

The term "real time" indicates that the geo-zoned map is generated and updated continuously, so that it is guaranteed that the requirements for a command and control beyond visual line of sight of RPAS are met anytime and anywhere. The system according to the present invention controls a respective environment by receiving data, processing them and returning a respective 3D geo-zoned map and respective routes for the drones sufficiently quickly to affect the environment at that time.

In the following, the generation of the 3D colored and geo-zoned map as outcome of the navigation server, is described.

The air space is dynamically divided into 3D zones. A zone is charaterized by several KPIs (key performance indicator).
- For a network provider, the KPIs are network-related, such as guarenteed (e.g., with a probability of 99%) thresholds of coverage, data rate and latency. For example, if the drone is flying from x = 10, y = 10, z = 10 to x = 50, y = 50, z = 50, and the operator of the drone has specified in the navigation client that for his use case 100% coverage, data rate above 1 Mbit/s and latency below 10 ms are needed, the following might occur, as examples:
   ∘ If the network operator knows that the KPI are met during the whole route, there will be only one green zone.
   ∘ If the network operator knows that the KPI are in some cases definitely not met, there will be green and red zones, e.g., x = 10, y = 10, z = 10 to x = 25, y = 25, z = 25 is a green zone the rest of the route is a red zone.
      → The zone can change in real time depending on the changes in the environment and the load in the network, thereby, a real time involvement of the network provider in the navigation system is necessary.
- Similarly to the network provider, the KPIs for the lawful agency are related to law -> the zones are defined based on the law and the use case, e.g., if a large drone is used and a camera is mounted and used during the drone operation, due to privacy law the drone might no be allowed to fly over some urban locations etc..This also holds for weather agency and other agencies, i.e., the zones are always based on the use case and the specific KPIs of the respective agency.
   → The network provider and all other relevant agencies, i.e., the data sources are connected to the navigation server, which is the interface to the user of the system, i.e., the information about the zones that the navigation server receives from the different agencies are multiplied by a score/weight (depending on the importance of the agency and the needs of the users - the users can put weights for those information in it is interface of the system (the navigation client) - in general - smart defaults are applied but user decisions are also supported).
   → In summary, the navigation server provides to the user in real time a 3D colored and zoned map (green, yellow, red) based on the aggregation and correlation of the different information the server receives from the different agencies and the weights of those information as well as the configuration of the user.

The terms "user", "operator" and "drone operator" are synonymously and interchangeably used in the present disclosure.

The terms "operation" and "drone operation" are also used synonymously.

The operation-aware aerial navigation system according to the present invention comprises three module-types each consisting of serveral sub-modules. The module types are: navigation server, navigation client and navigation agent. The system must comprise at least one module of each type but it might have more.

Navigation Server: The navigation server dynamically provides to the user/drone operator a 3D colored and geo-zoned map based on the aggregation and correlation of multiple information received from different relevant data sources and from the navigation client, e.g. the macro target of the operation and other relevant data.

The navigation server comprises, as already mentioned before, the following submodules:
Navigation Manager: the navigation manager is the central unit or the brain of the navigation server. The navigation manager gets information from the informations dispatcher. It is possible that external data resources provide information about a static overview about the quality (coverage, latency, etc.) of respective networks in a respective specific zone or at a specific coordinate (x, y, z) or for a 3D link, e.g. between a first coordinate (x₁, y₁, z₁) and a second coordinate (x₂, y₂, z₂). Based on such a static 3D network overview, a dynamic overview which also considers time as a further parameter, can be generated. Such a dynamic overview can further be used, probably filtered due to further constraints, by the navigation manager to generate dynamically the 3D geo-zoned map.
Navigation Information Dispatcher: The navigation information dispatcher is responsible for collecting and sending navigation information internally (between the submodules) and externally (between submodules and data sources).
Navigation Storage: the navigation storage is responsible for storing all relevant information such as maps and logs (in raw format) for re-use and for non-repudiation issues and historical analysis, among others.

According to a further embodiment of the claimed system, the navigation manager is composed of three sub-submodules:
- An aggregation engine: It sorts/categorizes the information received from the navigation information dispatcher based on pre-defined criterias.
- A correlation engine: It parses aggregated information und uses weighting mechanisms (rule-based) to correlate the information. The weights are based on the relevance of the information, i.e., the corresponding data source, and the preferences of the user. The correlation engine might also implement a rule less method, i.e., the correlation engine gets informed about what is important for a safe operation and it dynamically computes the weights of the information received.
- A map generator: It generates based on the input of the correlation engine, based on local map information and based on information provided by the dispatcher a 3D colored and geo-zoned map.

The server can be centrally used by a navigation system provider but it can also be used locally by (medium and large) drone operators. A navigation server can serve several navigation clients (belonging to different operators).

According to a further embodiment, the system comprises a plurality of navigation agents, each running on a respective drone, wherein the navigation client is further configured to compute a route for all drones which are involved in the operation.

In contrast to the navigation server, which should/could be run by a navigation system provider and offered as service for the drone operators, the navigation client is run locally by a respective drone operator. It is the interface between the drone operator, the navigation server, the external data sources and the navigation agents running on the drones. The drone operator uses the navigation client to enter the information about the operation. The navigation client derives and forwards the necessary parameters to the navigation server and it receives, based on the parameters/use case, a 3D colored and geo-zoned map. The navigation client then computes by using optimization algorithms, e.g., Mixed-Integer Nonlinear Optimization, a route for each of the drones that are involved in the operation, based on the 3D colored and geo-zoned map and the initial input of the user, i.e., number of the drones involved, the macro target of the operation, the preferences of the user (should they achieve the goal with minimum time or maximum granularity etc.) and others. That is, the routes for the drones could vary if only 2 drones should achieve the goal or if, e.g., 10 drones are involved. Note also that if there is a yellow zone due to weak communication KPIs (key performance indicator) in the geo-area corresponding to the zone, yet, the macro target of the operator lies in that area, the navigation client might compute the routes in such a way that some drones will act as communication relays to improve the communication link in the target area. The navigation client forwards than the routes and other related information to the drones. During the operation, the navigation client might receive updates from the navigation server or feedback from the drones, as a result, the navigation client might update the routes for the drones. Generally, each drone is assigned to one route which is mostly different to the routes of the other drones which are involved in the operation.

According to still another embodiment, the navigation client comprises the following sub-modules:
C1) An operator interface for entering an input of a user/drone operator and for visualising the map, the route(s) and mobility of the drone(s);
C2) A navigation information parser that is configured to derive relevant parameters from information provided by the user, the navigation agent and the navigation server;
C3) A route generator that is configured to generate and update the routes of the drones based on the map received from the server, the input of the user, and feedback of the navigation agents;
C4) A navigation communicator that is configured to monitor a communication link between the navigation client and the navigation agent, to seamlessly handover between different communication technologies, and to communicate with the navigation server and the navigation agent(s) as well as with the other sub-modules of the navigation client.

The navigation agent as one module of the claimed system runs on a respective drone. The navigation agent is responsible for the automatic steering of the drone or of providing the information for an external steering engine on the respective drone.

According to another embodiment, the navigation agent comprises the following sub-modules:
B1) A communication service that is configured to monitor and manage communication with the navigation client and/or with other drones;
B2) A micro mobility service that is configured to derive from the route provided by the navigation client and from local information a micro mobility of the drone, the micro mobility being used to steer the drone;
B3) A system monitoring service that is configured to monitor a status of different critical components of the drone;
B4) A neighborhood detection that is configured to detect and report, if necessary, the neighborhood of the drone.

Summarized, it is to be stated that the claimed system has as user input the macro mobility goal of the drone(s) and the operation requirements (or information that enables the system to derive the requirements, e.g., the drone type and the type of a respective application). Operation requirements must include communication requirements, and could include others, such as maximal operation time etc. Based on the user input, local information at the drone level (relevant sensors: GPS, battery and neighborhood information: near obstacles and drones), and relevant flight conditions information provided by a navigation system provider in cooperation with a network provider, the system dynamically (in real time) defines the macro and micro mobility of the drone(s) in a way to always meet the operation requirements or to go in an emergency mode.

The following detailed description and accompanying drawings provide a better understanding of the nature and advantages of the present invention.

### Brief description of the drawings

Fig. 1 shows an embodiment of the system according to the present invention.
Fig. 2 shows a block diagram indicating a cooperation of the different components of an embodiment of the claimed system.
Fig. 3 shows a further block diagram describing the functionality of a further embodiment of the claimed system.

### Detailed description of the drawings

The features of the invention will be described with respect to the figures. The features of the invention which can be extended to show abstractions that can be embodied into possible use cases of the invention are also explained with respect to the figures.

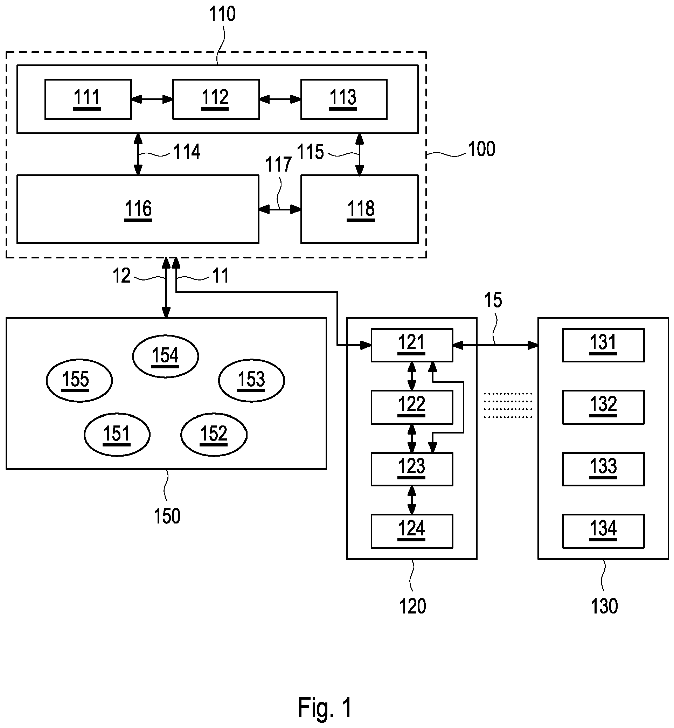

Figure 1 shows an embodiment of the system according to the present invention. The operation-aware aerial navigation system comprises as modules at least one navigation server 100, at least one navigation agent 130 and at least one navigation client 120, each module 100, 120 and 130 consisiting of several sub-modules.

The navigation server 100 is configured to aggregate and correlate multiple data received via link 12 from different relevant data sources 150 and via link 11 from the navigation client 120. Further the navigation server 100 is configured to dynamically provide to a user/a drone operator a 3D colored and geo-zoned map based on the aggregated and correlated data. The navigation agent 130 is running on a drone and configured to master steering of the drone. The navigation client 120 is running locally by the drone operator and acting as interface via links 11, 12, and 15 between the drone operator, the navigation server 100 and external data sources 150 and the navigation agent 130. The navigation agent 130 is running on the drone and configured to derive from a route provided by the navigation client 120 and from local information (neighbourhood, battery, wind, etc.) a micro mobility of the drone (speed, direction, next position, etc.) which is then used to steer the drone.

The navigation server 100 comprises as sub-modules a navigation manager 110, a navigation information dispatcher 116 and a navigation storage 118. The navigation information dispatcher 116 is configured to collect and send navigation information internally, i.e. between the submodules, and externally, i.e. between submodules and data sources 150, and the navigation storage 118 is configured to store relevant information, such as maps and logs (in raw format) for re-use and for non-repudiation issues and historical analysis.

Generally, the navigation manager 110 comprises as sub-submodules an aggregation engine 111, which is configured to sort/categorize information received from the navigation information dispatcher 116 based on pre-defined criteria, a correlation engine 112, which is configured to parse aggregated information and to use weighting mechanisms (rule-based) to correlate the information, and a map generator 113, wherein the map generator 113 is configured to generate based on the input of the correlation engine 112, based on local map information and based on information provided by the navigation information dispatcher 116 the 3D colored and geo-zoned map.

The navigation server 100 can be used centrally by a navigation system provider or locally by respective drone operators.

The data sources 150 is a map provider 151, a weather agency 152, a lawful agency 153, a network operator 154 and/or other sources 155.

The navigation client 120 is run locally by an operator. It is the interface between the operator, the navigation server 100 and the external data sources 150 and the navigation agents 130 running on the drones. The operator uses the navigation client 120 to enter the information about the operation. The client 120 derives and forwards the necessary parameters to the navigation server 100 and it receives based on the parameters/use case a 3D colored and geo-zoned map from the navigation server 100. The navigation client 120 then computes by using optimization algorithms a route for the drones that are involved in the operation, based on the 3D colored and geo-zoned map and the initial input of the user, i.e., number of the drones involved, the macro target of the operation, the preferences of the user and others. That is, the routes could vary if only 2 drones should achieve the goal or if, e.g., 10 drones are involved. Note also that if there is a yellow zone due to weak communication KPIs (key performance indicator) in the geo-area corresponding to the zone, yet, the macro target of the operator lies in that area, the navigation client 120 might compute the route in such a way that some drones will act as a communication relays to improve the communication link in the target area. The navigation client 120 forwards than the routes and other related information to the respective drones. During the operation, the navigation client 120 might receive updates from the navigation server 100 or feedback from the drones, as a result, the navigation client 120 might update the routes.

In the example shown here, the navigation client 120 comprises as sub-modules a navigation communicator 121 that is configured to monitor the communication link 15 between the navigation client 120 and the navigation agent 130, to seamlessly handover between different communication technologies, and to communicate with the navigation server 100 and the navigation agent 130 as well as with the other sub-modules of the navigation client 120; a route generator 122 that is configured to generate and update the route(s) of the drone(s) based on the map received from the server 100, the input of the user, and feedback of the navigation agents 130; a navigation information parser 123 that is configured to derive relevant parameters from information provided by the user, the navigation agent 130 and the navigation server 100; and an operator interface 124 for entering an input of a user/drone operator and for visualising the map, the route and mobility of the drone(s).

The navigation agent 130 as one module of the claimed system runs on a respective drone. The navigation agent 130 is responsible for the automatic steering of the drone or of providing the information for an external steering engine on the respective drone. The navigation agent 130 comprises as sub-modules a communication service 131 that is configured to monitor and manage communication with the navigation client 120 and/or with other drones; a micro mobility service 132 that is configured to derive from the route provided by the navigation client 120 and from local information a micro mobility of the drone, the micro mobility being used to steer the drone; a system monitoring service 133 that is configured to monitor a status of different critical components of the drone; and a neighborhood detection service 134 that is configured to detect and report, if necessary, the neighborhood of the drone.

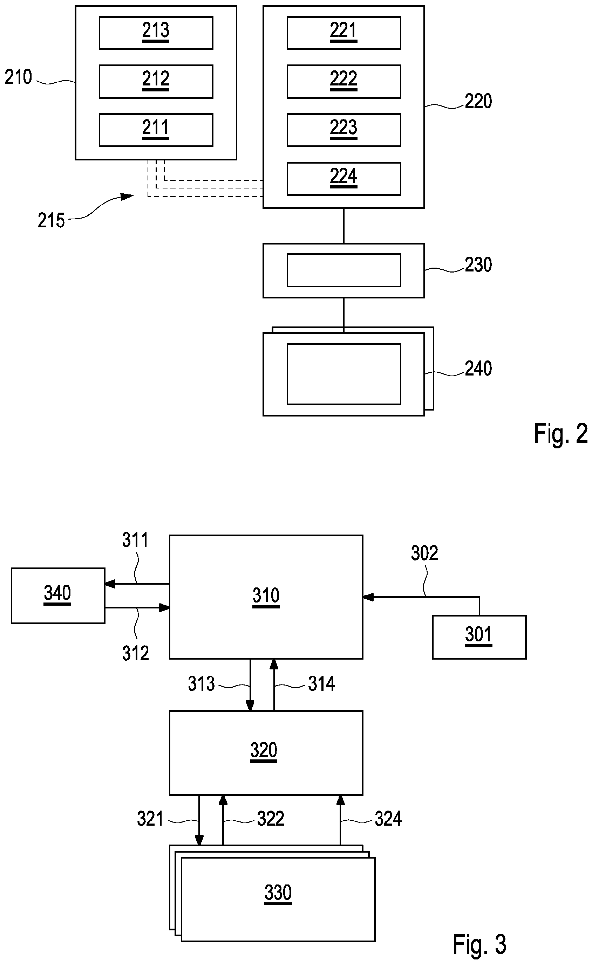

Figures 2 and 3 show schematically, using the example of an embodiment of the system according to the present invention, an information exchange between different compoments of the claimed system and between components of the claimed system and relevant external compoments.

Figure 2 distinguish between a drone part 210, an operator part 220, a navigation system provider part 230 and a network provider part 240. It is possible that there are more network providers, and consequently a respective number of network provider parts 240.

The drone part 210 comprises a communication engine 211, a neighbourhood detection engine 212 and a decentral operation aware micro mobility engine 213. The decentral operation aware micro mobility engine 213 is configured to determine, e.g. to calculate, and to provide a current micro mobility of the drone under consideration. The neighbourhood detection engine 212 is configured to detect the current neighbourhood of the drone under consideration. The communication engine 211 is configured to provide the determined micro mobility of the drone and its current neighbourhood via communication link 215 to a respective communication engine 224 which is part of the operator part 220. The communication link 215 can be realized by different wireless communication links or interfaces.

The communication engine 211, the neighbourhood detection engine 212 and the decentral operation aware micro mobility engine 213 are generally installed on the respective drone, i.e. on the drone under consideration, i.e. on the drone which is involved in the current operation.

The operator part 220 comprises, besides the communication engine 224, a interface 221, which can be realised by a graphical user interface, an operation aware macro mobility engine 222 and a central operation-aware micro mobility engine 223. The interface 221 is to be used for input of an operator of the respective drone. The operation aware macro mobility engine 222 is configured, on the basis of the information of the user/operator about a macro mobility goal of the drone and operation requirements received via the interface 221, the information received from the drone part 210, such as current neighbourhood and current micro mobility of the respective drone via link 215, the information of the navigation system provider 230 about flight conditions and the information of the network provider 240 about current network conditions, to calculate dynamically in real time a macro and micro mobility of the respective drone in a way to always meet the operation requirements or to go in an emergency mode.

The operator part 220 is in a communicative connection with the navigation system provider part 230 and the network provider part 240.

The navigation system provider part 230 comprises a flight condition engine which provides to the operator part 220 current flight conditions.

The network provider comprises a network conditions engine which provides to the operator part 220 current network conditions.

Figure 3 shows schematically the collaboration of the different units which are relevant for enabling the claimed system to dynamically define the macro and micro mobility of a respective drone so that the operation requirements are always met. Figure 3 shows a navigation system interface 310. Via interface 310 which can be realised by a graphical user interface, a user/operator 301 can input, as indicated by link 302, for each drone in operation a respective drone type, a macro mobility goal of the respective drone and operation requirements. The operations requirements must include communication requirements. The operations requirements can include other requirements, such as maximal operation time etc.

The network provider(s) 330 provides in reaction to an inquiry about network conditions in specific geo zones of interest (321) average network conditions per zone (322). Further the network provider(s) 330 provides in real time changes 324 above/under predefined thresholds per zone.

The navigation system provider 320 receives via link 313 information about a geo zone x corresponding to a start position of a drone in operation or corresponding to a macro goal of the respective drone. By using the information of the network provider, the navigation system provider 320 can provide via link 314 (in real time) flight conditions in the geo zone x such as network, weather, etc.

The drone 340 in geo zone x always provides via link 312 information about its current position, its current speed, its current direction and its current neighbourhood.

On the basis of the information about the current route, the current position and speed and the current neighborhood of the respective drone, the navigation server (as shown in Figure 1) can dynamically calculate a 3D colored and geo-zoned map. On the basis of this map, it is possible to dynamically define a suitable macro and micro mobility of the drone, the macro and micro mobility being adapted to the current conditions, respectively, so that the operations requirements are always met. The drone is dynamically steered (as indicated by link 311) on the basis of the calculated route.

## Claims

1. An operation-aware aerial navigation system comprising as modules at least one navigation server (100), at least one navigation agent (130) and at least one navigation client (120), each module consisting of several sub-modules, wherein
A) the navigation server (100) is configured to aggregate and correlate multiple data received from different data sources (150) and from a navigation client (120), and to dynamically provide to a drone operator a geo-zoned map based on the aggregated and correlated data, wherein the geo-zoned map is a map of an air space that is divided into 3D zones and, wherein the data sources (150) are selected from the group comprising at least communication network operator, lawful agency, weather agency;
B) the navigation agent (130) is running on a drone and configured to master steering of the drone;
C) the navigation client (120) is running locally by the drone operator and acting as interface between the drone operator, the navigation server (100) and the navigation agent (130) running on the drone;
D) the navigation client (120) is configured to compute and update a route for the drone that is involved in a given drone-operation based on the geo-zoned map, feedback from the navigation agent (130) and an initial input of the drone operator.

2. The system according to claim 1, wherein the geo-zoned map is a 3D coloured and geo-zoned map.

3. The system according to claim 1 or 2 which comprises a plurality of navigation agents (130), each running on a respective drone, wherein the navigation client (120) is further configured to compute a route for each of the drones which are involved in the operation.

4. The system according to any one of the preceding claims, wherein the navigation server (100) comprises as sub-modules a navigation manager (110), a navigation information dispatcher (116) and a navigation storage (118) wherein the navigation information dispatcher (116) is configured to collect and send navigation information internally and externally, and the navigation storage (118) is configured to store relevant information.

5. The system according to claim 4, wherein the navigation manager (110) is composed of three sub-submodules:
a) an aggregation engine (111), which is configured to sort/categorize information received from the navigation information dispatcher (116) based on pre-defined criteria,
b) a correlation engine (112), which is configured to parse aggregated information and to use weighting mechanisms to correlate the information, wherein weights of the weighting mechanisms are based on relevance of the information and,
c) a map generator (113), wherein the map generator (113) is configured to generate based on the input of the correlation engine (112), based on local map information and based on information provided by the navigation information dispatcher (116) the geo-zoned map.

6. The system according to any one of the preceding claims, wherein the navigation server (100) is used centrally by a navigation system provider or locally by respective drone operators.

7. The system according to any one of the preceding claims, wherein the navigation server (100) is configured to serve several navigation clients (120) belonging to different drone operators.

8. The system according to any one of the preceding claims, wherein the navigation client (120) comprises the following sub-modules:
C1) An operator interface (124) for entering an input of a drone operator and for visualising the map;
C2) A navigation information parser (123) that is configured to derive relevant parameters from information provided by the drone operator, the navigation agent (130) and the navigation server (100);
C3) A route generator (122) that is configured to generate and update the route of the drone based on the map received from the server, the input of the user, and feedback of the navigation agents;
C4) A navigation communicator (121) that is configured to monitor a communication link between the navigation client (120) and the navigation agent (130), to seamlessly handover between different communication technologies, and to communicate with the navigation server (100) and the navigation agent (130) as well as with the other sub-modules of the navigation client (120).

9. The system according to any one of the preceding claims, wherein the navigation agent (130) comprises the following sub-modules:
B1) A communication service (131) that is configured to monitor and manage communication with the navigation client (120) and/or with other drones;
B2) A micro mobility service (132) that is configured to derive from the route provided by the navigation client (120) and from local information a micro mobility of the drone, the micro mobility being used to steer the drone;
B3) A system monitoring service (133) that is configured to monitor a status of different critical components of the drone;
B4) A neighborhood detection (134) that is configured to detect and report, if necessary, the neighborhood of the drone.

10. A method to fly at least one drone beyond visual line of sight by using a system according to any one of the preceding claims.

## Patentansprüche

1. Betriebsrückmeldendes Flugnavigationssystem, das als Module mindestens einen Navigationsserver (100), mindestens einen Navigationsagenten (130) und mindestens einen Navigationsclienten (120) umfasst, wobei jedes Modul aus mehreren Teilmodulen besteht, wobei
A) der Navigationsserver (100) dazu konfiguriert ist, mehrere von verschiedenen Datenquellen (150) und von einem NavigationsClienten (120) empfangene Daten zu aggregieren und zu korrelieren und einem Drohnen-Bediener dynamisch eine geozonierte Karte auf der Basis der aggregierten und korrelierten Daten zur Verfügung zu stellen,
wobei die geozonierte Karte eine Karte eines in 3D-Zonen unterteilten Luftraums ist und wobei die Datenquellen (150) aus der Gruppe ausgewählt werden, die mindestens Kommunikationsnetzbetreiber, Rechtsbehörde, Wetteramt umfasst;
B) der Navigationsagent (130) auf einer Drohne ausgeführt wird und dazu konfiguriert ist, die Drohne zu steuern;
C) der Navigationsclient (120) lokal vom Drohnenbediener ausgeführt wird und als Schnittstelle zwischen dem Drohnenbediener, dem Navigationsserver (100) und dem auf der Drohne ausgeführten Navigationsagenten (130) fungiert;
D) der Navigationsclient (120) dazu konfiguriert ist, eine Route für die an einer bestimmten Drohnenoperation beteiligte Drohne auf der Grundlage der geozonierten Karte, des Feedbacks des Navigationsagenten (130) und einer anfänglichen Eingabe des Drohnenbedieners zu berechnen und zu aktualisieren.

2. System nach Anspruch 1, wobei die geozonierte Karte eine farbige und geozonierte 3D-Karte ist.

3. System nach Anspruch 1 oder 2, das eine Mehrzahl von Navigationsagenten (130) umfasst, die jeweils auf einer entsprechenden Drohne ausgeführt sind, wobei der Navigationsclient (120) ferner dazu konfiguriert ist, eine Route für jede der an dem Vorgang beteiligten Drohnen zu berechnen.

4. System nach einem der vorangegangenen Ansprüche, wobei der Navigationsserver (100) als Teilmodul einen Navigationsmanager (110), einen Navigationsinformations-Dispatcher (116) und einen Navigationsspeicher (118) umfasst, wobei der Navigationsinformations-Dispatcher (116) dazu konfiguriert ist, Navigationsinformationen intern und extern zu sammeln und zu senden, und der Navigationsspeicher (118) dazu konfiguriert ist, relevante Informationen zu speichern.

5. System nach Anspruch 4, bei dem der Navigationsmanager (110) sich aus drei Teil-Teilmodulen zusammensetzt:
a) Einer Aggregationsmaschine (111), die dazu konfiguriert ist, vom Navigationsinformations-Dispatcher (116) empfangenen Informationen auf der Grundlage vordefinierter Kriterien zu sortieren und zu kategorisieren,
b) Einer Korrelationsmaschine (112), die dazu konfiguriert ist, aggregierte Informationen zu parsen und Gewichtungsmechanismen zum Korrelieren der Informationen zu verwenden, wobei die Gewichte der Gewichtungsmechanismen auf der Relevanz der Informationen basieren und,
c) Einem Kartengenerator (113), wobei der Kartengenerator (113) dazu konfiguriert ist, auf der Grundlage der Eingabe der Korrelationsmaschine (112), auf der Grundlage lokaler Karteninformationen und auf der Grundlage von Informationen, die von dem Navigationsinformations-Dispatcher (116) bereitgestellt werden, die geozonierte Karte zu erzeugen.

6. System nach einem der vorangegangenen Ansprüche, wobei der Navigationsserver (100) zentral von einem Navigationssystemanbieter oder lokal von den jeweiligen Drohnenbedienern genutzt wird.

7. System nach einem der vorangegangenen Ansprüche, wobei der Navigationsserver (100) dazu konfiguriert ist, mehrere Navigationsclients (120) zu bedienen, die zu verschiedenen Drohnenbedienern gehören.

8. System nach einem der vorangegangenen Ansprüche, wobei der Navigationsclient (120) die folgenden Teilmodule umfasst:
C1) Eine Bedienerschnittstelle (124) für das Eingeben einer Eingabe eines Drohnenbedieners und für das Visualisieren der Karte;
C2) Ein Navigationsinformations-Parser (123), der dazu konfiguriert ist, relevante Parameter aus Informationen abzuleiten, die vom Drohnenbediener, dem Navigationsagenten (130) und dem Navigationsserver (100) bereitgestellt werden;
C3) Einen Routengenerator (122), der dazu konfiguriert ist, die Route der Drohne auf der Grundlage der vom Server erhaltenen Karte, der Eingaben des Benutzers und des Feedbacks der Navigationsagenten zu generieren und zu aktualisieren;
C4) Ein Navigationskommunikator (121), der dazu konfiguriert ist, eine Kommunikationsverbindung zwischen dem Navigationsclient (120) und dem Navigationsagenten (130) zu überwachen, nahtlose Handover zwischen verschiedenen Kommunikationstechnologien durchzuführen und mit dem Navigationsserver (100) und dem Navigationsagenten (130) sowie mit den anderen Teilmodulen des Navigationsclients (120) zu kommunizieren.

9. System nach einem der vorangegangenen Ansprüche, wobei der Navigationsagent (130) die folgenden Teilmodule umfasst:
B1) Einen Kommunikationsdienst (131), der dazu konfiguriert ist, die Kommunikation mit dem Navigationsclient (120) und/oder mit anderen Drohnen zu überwachen und zu verwalten;
B2) Einen Mikromobilitätsdienst (132), der dazu konfiguriert ist, aus der vom Navigationsclient (120) bereitgestellten Route und aus lokalen Informationen eine Mikromobilität der Drohne abzuleiten, wobei die Mikromobilität zur Steuerung der Drohne verwendet wird;
B3) Einen Systemüberwachungsdienst (133), der dazu konfiguriert ist, den Status verschiedener kritischer Komponenten der Drohne zu überwachen;
B4) Eine Nachbarschaftserkennung (134), die dazu konfiguriert ist, die Nachbarschaft der Drohne zu erkennen und gegebenenfalls zu melden.

10. Verfahren, um mindestens eine Drohne unter Verwendung eines Systems nach einem der vorstehenden Ansprüche über die visuelle Sichtlinie hinaus zu fliegen.

## Revendications

1. Système de navigation aérienne modulaire automoniteur, comprenant au moins un serveur de navigation (100), au moins un agent de navigation (130) et au moins un client de navigation (120), chaque module étant composé de plusieurs sous-modules, sachant que
A) le serveur de navigation (100) est configuré de manière à agréger et à corréler plusieurs données reçues de différentes sources de données (150) et d'un client de navigation (120), et de manière à fournir dynamiquement à un opérateur d'un drone une carte de géozones sur la base des données agrégées et corrélées,
ladite carte de géozones représentant une carte d'un espace aérien divisé en zones en 3D et lesdites sources de données (150) étant sélectionnées dans le groupe comprenant au moins un opérateur de réseau de communication, une autorité judiciaire, un service de météorologie ;
B) l'agent de navigation (130) est exécuté sur un drone et est configuré de manière à piloter le drone ;
C) le client de navigation (120) est exécuté localement par l'opérateur du drone et fait office d'interface entre l'opérateur du drone, le serveur de navigation (100) et l'agent de navigation (130) exécuté sur le drone ;
D) le client de navigation (120) est configuré de manière à calculer et à actualiser un itinéraire pour le drone engagé dans une opération de drone déterminée sur la base de la carte de géozones, du feedback de l'agent de navigation (130) et d'une saisie initiale de l'opérateur du drone.

2. Système selon la revendication 1, dans lequel la carte de géozones est une carte de géozones en 3D et en couleurs.

3. Système selon la revendication 1 ou 2 comprenant une pluralité d'agents de navigation (130) exécutés respectivement sur un drone correspondant, sachant que le client de navigation (120) est également configuré de manière à calculer un itinéraire pour chaque drone engagé dans l'opération.

4. Système selon l'une des revendications précédentes, dans lequel le serveur de navigation (100) comprend les sous-modules suivants : un gestionnaire de navigation (110), un répartiteur d'informations de navigation (116) et une mémoire de navigation (118), ledit répartiteur d'informations de navigation (116) étant configuré de manière à collecter et à envoyer des informations de navigation en interne et en externe et la mémoire de navigation (118) étant configurée de manière à stocker des informations pertinentes.

5. Système selon la revendication 4, dans lequel le gestionnaire de navigation (110) est constitué de trois sous-modules secondaires :
a) un dispositif d'agrégation (111) configuré de manière à trier et à catégoriser des informations reçues du répartiteur d'informations de navigation (116) sur la base des critères prédéfinis,
b) un dispositif de corrélation (112) configuré de manière à analyser des informations agrégées et à utiliser des mécanismes de pondération pour la corrélation des informations, les pondérations des mécanismes de pondération étant basées sur la pertinence des informations, et
c) un générateur de carte (113) configuré de manière à générer la carte de géozones sur la base de l'entrée du dispositif de corrélation (112), sur la base des informations cartographiques locales et sur la base des informations fournies par le répartiteur d'informations de navigation (116).

6. Système selon l'une des revendications précédentes, dans lequel le serveur de navigation (100) est utilisé de manière centralisée par un fournisseur du système de navigation ou de manière locale par les opérateurs de drones correspondants.

7. Système selon l'une des revendications précédentes, dans lequel le serveur de navigation (100) est configuré de manière à servir plusieurs clients de navigation (120) appartenant à des opérateurs de drones différents.

8. Système selon l'une des revendications précédentes, dans lequel le client de navigation (120) comporte les sous-modules suivants :
C1) une interface d'opérateur (124) destinée à saisir une entrée d'un opérateur du drone et à visualiser la carte ;
C2) un analyseur d'informations de navigation (123) configuré de manière à déduire des paramètres pertinents à partir des informations fournies par l'opérateur du drone, l'agent de navigation (130) et le serveur de navigation (100) ;
C3) un générateur d'itinéraire (122) configuré de manière à générer et à actualiser l'itinéraire du drone sur la base de la carte reçue du serveur, des informations de l'opérateur et du feedback des agents de navigation ;
C4) un communicateur de navigation (121) configuré de manière à surveiller une liaison de communication entre le client de navigation (120) et l'agent de navigation (130), à réaliser des transferts intercellulaires ininterrompus entre différentes technologies de communication et à communiquer avec le serveur de navigation (100) et l'agent de navigation (130) ainsi qu'avec les autres sous-modules du client de navigation (120).

9. Système selon l'une des revendications précédentes, dans lequel l'agent de navigation (130) comporte les sous-modules suivants :
B1) un service de communication (131) configuré de manière à surveiller et à gérer la communication avec le client de navigation (120) et/ou avec d'autres drones ;
B2) un service de micro-mobilité (132) configuré de manière à déduire une micro-mobilité du drone à partir de l'itinéraire fourni par le client de navigation (120) et à partir d'informations locales, sachant que la micro-mobilité est utilisée pour le pilotage du drone ;
B3) un service de surveillance du système (133) configuré de manière à surveiller l'état de différents composants critiques du drone ;
B4) un détecteur des alentours (134) configuré de manière à repérer et à signaler, le cas échéant, les alentours du drone.

10. Procédé destiné à faire voler au moins un drone au moyen d'un système selon l'une des revendications précédentes au-delà de la portée visuelle.
